# EUROPEAN PATENT APPLICATION

(11) **EP 4 607 257 A1**
(43) Date of publication of application: **27.08.2025**
(21) Application number: 23879778.1
(22) Date of filing: 17.10.2023
(51) Int. Cl.: G02B 7/04

(54) **LENS BARREL AND IMAGING DEVICE**

(30) Priority: 19.10.2022 JP 2022167615
(71) Applicant: NIKON CORPORATION, Tokyo 140-8601 (JP)
(72) Inventor: HAGIWARA, Kosuke, Tokyo 140-8601 (JP); HAMASAKI, Takuji, Tokyo 140-8601 (JP); TAKAHASHI, Nobuaki, Tokyo 140-8601 (JP)
(74) Representative: Hoffmann Eitle
(86) International application number: PCT/JP2023/037495
(87) International publication number: WO 2024/085135

(57) **Abstract**

A lens barrel includes a moving unit having a first protrusion, a driving unit configured to move the moving unit straight in an optical axis direction, a first barrel having a first cam groove, which engages with the first protrusion, and a second cam groove, and a first lens holding frame that has a second protrusion, which engages with the second cam groove, and holds a first lens, wherein the first barrel rotates as the moving unit moves in the optical axis direction, and the rotation of the first barrel moves the first holding frame in the optical axis direction.

## Description

### TECHNICAL FIELD

The present disclosure relates to a lens barrel and an imaging device.

### BACKGROUND ART

In an imaging device that performs zooming by using a cam ring to move a plurality of lens groups in a straight line in the optical axis direction, a mechanism to rotate the cam ring using an actuator has been proposed (for example, Patent Document 1). It is desired to reduce noise when the actuator is used to rotate the cam ring.

### PRIOR ART DOCUMENT

### PATENT DOCUMENT

Patent Document 1: Japanese Patent Application Laid-Open No. 2019-133009

### SUMMARY OF THE INVENTION

In a first aspect, there is provided a lens barrel including: a moving unit having a first protrusion; a driving unit configured to move the moving unit straight in an optical axis direction; a first barrel having a first cam groove, which engages with the first protrusion, and a second cam groove; and a first lens holding frame that has a second protrusion, which engages with the second cam groove, and holds a first lens, wherein the first barrel rotates as the moving unit moves in the optical axis direction, and the rotation of the first barrel moves the first holding frame in the optical axis direction.

In a second aspect, there is provided an imaging device including the above lens barrel.

Note that the configuration of the embodiment described later may be appropriately improved, and at least one or some of the components may be replaced with other components. Further, the constituent elements whose arrangement is not particularly limited are not limited to the arrangement disclosed in the embodiment, and can be arranged at positions where their functions can be achieved.

### BRIEF DESCRIPTION OF THE DRAWINGS

[FIG. 1] FIG. 1 is a cross-sectional view illustrating a configuration of a camera including a lens barrel according to an embodiment.
[FIG. 2] FIG. 2(A) is a perspective view of a second fixed barrel, and FIG. 2(B) is a perspective view of a zoom cam ring.
[FIG. 3] FIG. 3(A) is a perspective view of a zoom rotation restriction ring, and FIG. 3(B) is a perspective view illustrating a relationship among the second fixed barrel, the zoom cam ring, and the zoom rotation restriction ring.
[FIG. 4] FIG. 4(A) is a perspective view illustrating configurations of lens holding frames, and FIG. 4(B) is a perspective view illustrating a relationship among cam pins, the second fixed barrel, and the zoom cam ring.
[FIG. 5] FIG. 5(A) is a perspective view illustrating a drive mechanism in a disassembled state, and FIG. 5(B) is a perspective view illustrating the drive mechanism in an assembled state.
[FIG. 6] FIG. 6(A) is a perspective view illustrating a configuration of a coupling unit, and FIG. 6(B) is a cross-sectional view illustrating the configuration of the coupling unit.
[FIG. 7] FIG. 7(A) and FIG. 7(B) are views for describing a configuration of a lead screw support mechanism.
[FIG. 8] FIG. 8(A) to FIG. 8(D) are views for describing a configuration of a moving unit.
[FIG. 9] FIG. 9 is a side view of the drive mechanism.
[FIG. 10] FIG. 10(A) is a perspective view of a drive mechanism according to a first variation, and FIG. 10(B) and FIG. 10(C) are views for describing a configuration of the drive mechanism according to the first variation.
[FIG. 11] FIG. 11(A) is a cross-sectional view of a moving unit according to a second variation, and FIG. 11(B) is a cross-sectional view of a coupling unit according to a third variation.

### MODES FOR CARRYING OUT THE INVENTION

Hereinafter, a lens barrel according to an embodiment will be described in detail with reference to the drawings. Note that the shapes, lengths, thicknesses, and other dimensions of the parts illustrated in the embodiments do not necessarily correspond to those of actual parts, and some of the elements may be omitted from the drawings for ease of understanding. In addition, hatching of some components is omitted in some cases in the cross-sectional views.

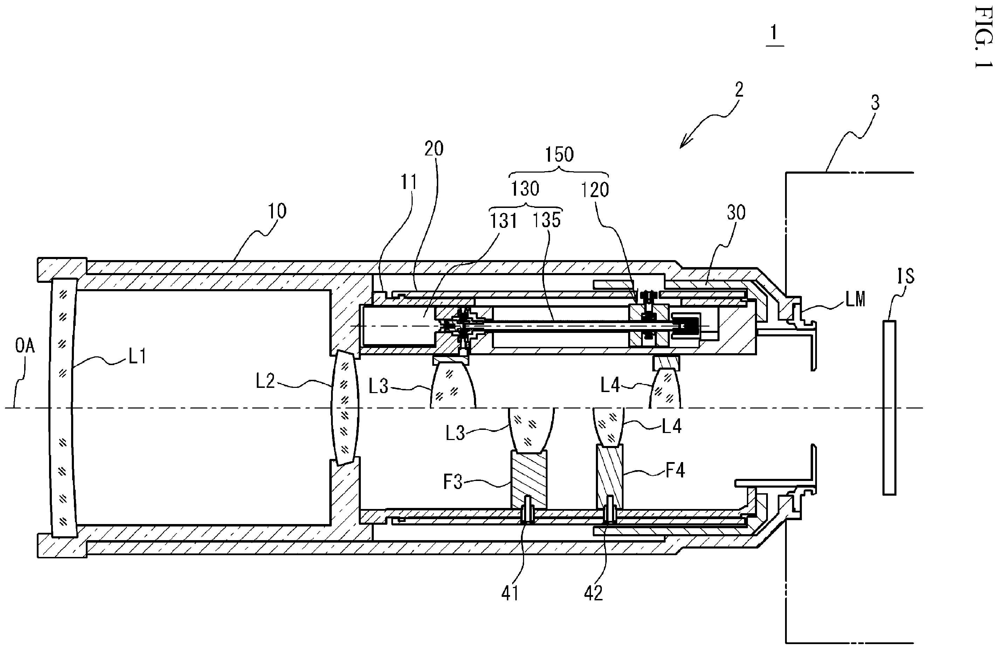

FIG. 1 is a cross-sectional view illustrating a configuration of a camera 1 including a lens barrel 2 according to an embodiment, and illustrates a wide (wide-angle) state on the upper side of a center line and a tele (telephoto) state on the lower side of the center line.

As illustrated in FIG. 1, the camera 1 includes a camera body 3 and the lens barrel 2. The lens barrel 2 has a lens mount LM at the rear portion (base end portion), and is detachably mounted on the camera body 3 by engaging with the body mount (not illustrated) of the camera body 3. In the present embodiment, the lens barrel 2 is detachable from the camera body 3, but this does not intend to suggest any limitation, and the lens barrel 2 and the camera body 3 may be integrated.

The camera body 3 includes an image sensor IS, a control unit (not illustrated), and the like. The image sensor IS is composed of a photoelectric conversion element such as a CCD (Charge Coupled Device), for example, and converts a subject image formed by the imaging optical system (the lens barrel 2 mounted on the camera body 3) into an electrical signal.

The control unit includes a CPU (Central Processing Unit) and the like, and integrally controls the overall operation of the camera 1 related to photographing including focusing driving in the camera body 3 and the mounted lens barrel 2.

As illustrated in FIG. 1, the lens barrel 2 according to the present embodiment includes lens groups L1 to L4 sequentially arranged along a common optical axis OA. The lens groups L1 and L2 are held by a first fixed barrel 10 included in the lens barrel 2, and the lens groups L3 and L4 are held by lens holding frames F3 and F4, respectively. In the present embodiment, each of the lens groups L3 and L4 is a zoom lens group that moves in the optical axis OA direction during zooming.

In the present embodiment, the first fixed barrel 10 is composed of a plurality of components, but may be composed of a single component. Each of the lens groups L1 to L4 may include one lens or a plurality of lenses. Further, although the lens barrel including four lens groups will be described as an example, the number of lens groups may be three or less or five or more.

The lens barrel 2 includes a second fixed barrel 11, a zoom cam ring 20 disposed further outward than the second fixed barrel 11, and a zoom rotation restriction ring 30 disposed further outward than the zoom cam ring 20.

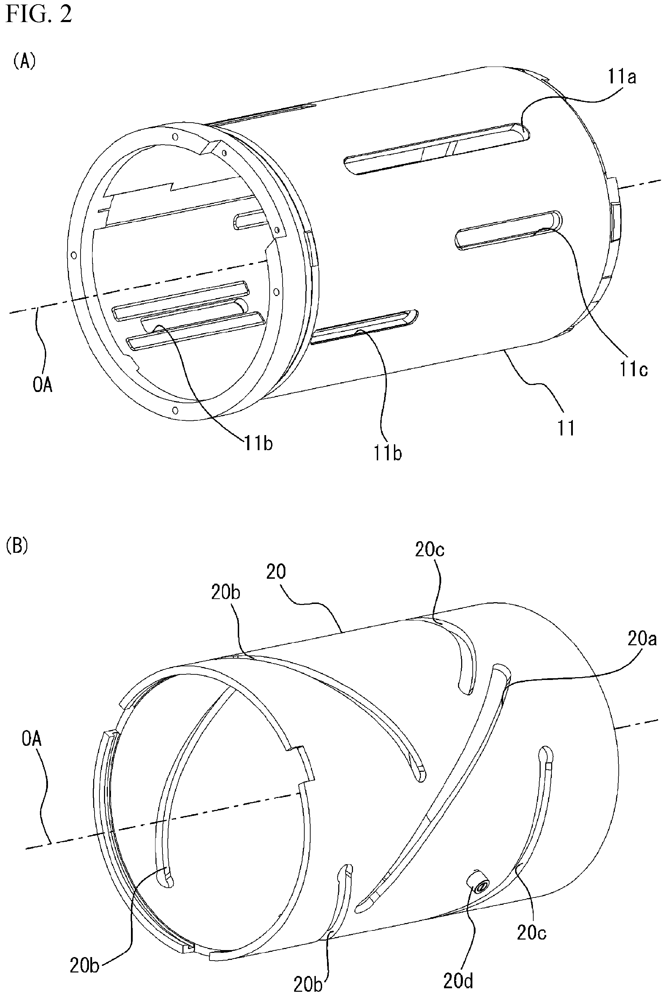

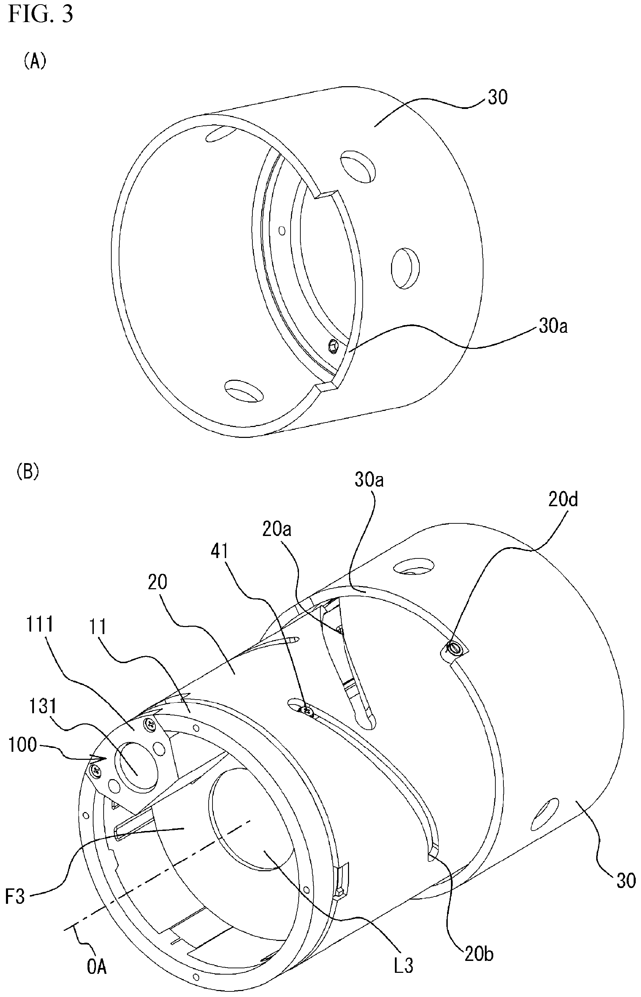

FIG. 2(A) is a perspective view of the second fixed barrel 11, and FIG. 2(B) is a perspective view of the zoom cam ring 20. FIG. 3(A) is a perspective view of the zoom rotation restriction ring 30, and FIG. 3(B) is a perspective view illustrating a relationship among the second fixed barrel 11, the zoom cam ring 20, and the zoom rotation restriction ring 30.

As illustrated in FIG. 2(A), the second fixed barrel 11 includes a clearance groove 11a, first straight grooves 11b, and second straight grooves 11c. The clearance groove 11a, the first straight groove 11b, and the second straight groove 11c extend in a direction parallel to the optical axis OA. One clearance groove 11a is provided in the circumferential direction of the second fixed barrel 11, three first straight grooves 11b are provided in the circumferential direction, and three second straight grooves 11c are provided in the circumferential direction. The respective numbers of the first straight grooves 11b and the second straight grooves 11c are not limited to three, and may be two or less, or four or more.

As illustrated in FIG. 2(B), the zoom cam ring 20 includes a first cam groove 20a, second cam grooves 20b, third cam grooves 20c, and a zoom rotation restriction pin 20d. One first cam groove 20a is provided in the circumferential direction of the zoom cam ring 20, three second cam grooves 20b are provided in the circumferential direction, and three third cam grooves 20c are provided in the circumferential direction.

As illustrated in FIG. 3(A), the zoom rotation restriction ring 30 has a cutout portion 30a.

As illustrated in FIG. 3(B), the second fixed barrel 11, the zoom cam ring 20, and the zoom rotation restriction ring 30 are arranged in this order from the inner peripheral side. The zoom cam ring 20 and the zoom rotation restriction ring 30 are arranged so that the zoom rotation restriction pin 20d of the zoom cam ring 20 is positioned in the cutout portion 30a of the zoom rotation restriction ring 30. That is, the zoom rotation restriction pin 20d is configured to come into contact with the end of the cutout portion 30a when the zoom cam ring 20 rotates around the optical axis OA by a predetermined amount. That is, the rotation of the zoom cam ring 20 around the optical axis OA is restricted by the cutout portion 30a.

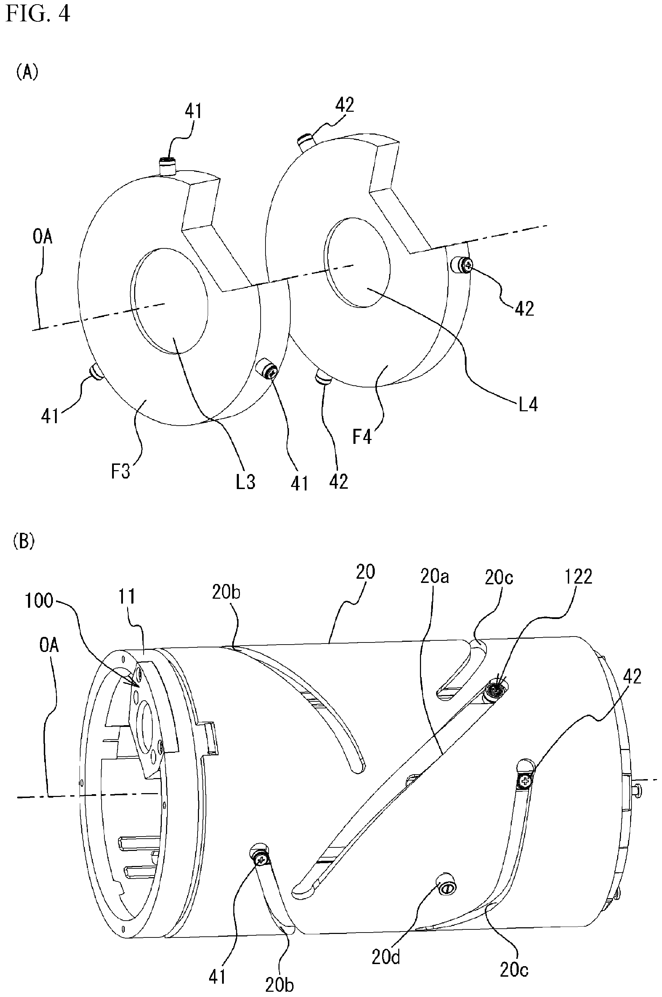

FIG. 4(A) is a perspective view illustrating configurations of the lens holding frames F3 and F4. As illustrated in FIG. 1, the lens holding frames F3 and F4 are disposed inside the second fixed barrel 11. As illustrated in FIG. 4(A), three cam pins 41 protruding in a direction intersecting the optical axis OA direction are provided in the circumferential direction on the outer circumferential surface of the lens holding frame F3. Three cam pins 42 protruding in a direction intersecting the optical axis OA direction are provided in the circumferential direction on the outer circumferential surface of the lens holding frame F4. The respective numbers of the cam pins 41 and the cam pins 42 are not limited to three, and may be two or less, or four or more. The cam pin 41 corresponds to a second protrusion, and the cam pin 42 corresponds to a fourth protrusion.

FIG. 4(B) is a perspective view illustrating a relationship among the cam pins 41 and 42, the second fixed barrel 11, and the zoom cam ring 20.

The cam pin 41 of the lens holding frame F3 penetrates through the first straight groove 11b of the second fixed barrel 11 and engages with the second cam groove 20b of the zoom cam ring 20. Thus, when the zoom cam ring 20 rotates, the lens holding frame F3 is moved straight in the optical axis OA direction along the first straight groove 11b and the second cam groove 20b.

The cam pin 42 of the lens holding frame F4 penetrates through the second straight groove 11c of the second fixed barrel 11 and engages with the third cam groove 20c of the zoom cam ring 20. Thus, when the zoom cam ring 20 rotates, the lens holding frame F4 moves straight in the optical axis OA direction along the second straight groove 11c and the third cam groove 20c.

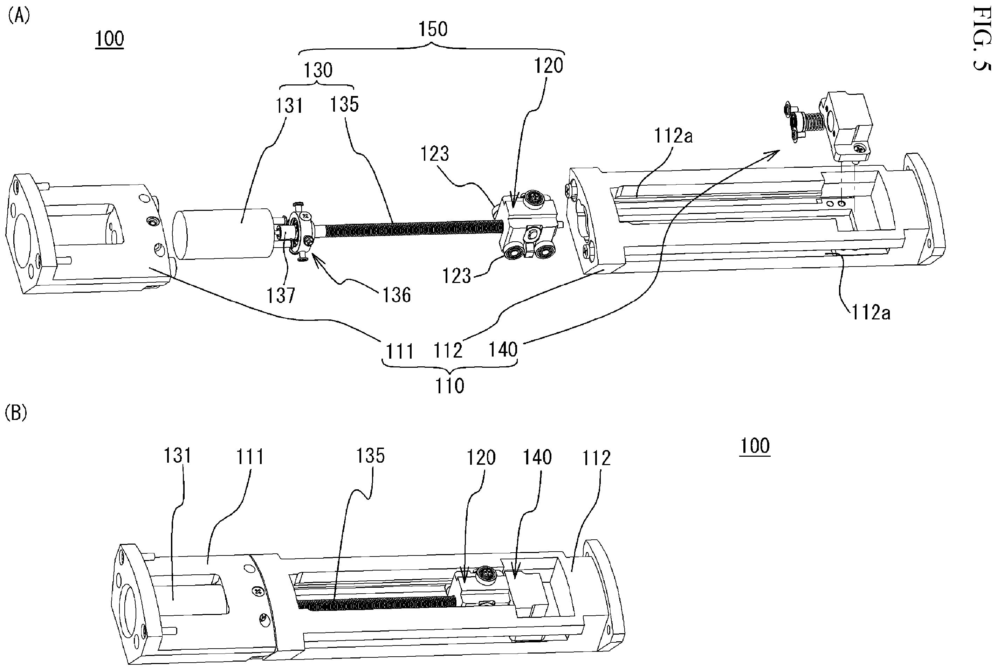

Next, the driving (rotation) of the zoom cam ring 20 will be described. The zoom cam ring 20 is driven by a drive mechanism 100 fixed to the inside of the second fixed barrel 11. FIG. 5(A) is a perspective view illustrating the drive mechanism 100 in a disassembled state, and FIG. 5(B) is a perspective view illustrating the drive mechanism 100 in an assembled state.

As illustrated in FIG. 5(A), the drive mechanism 100 includes a main unit 150 and a support unit 110 that supports the main body 150. The support unit 110 includes a motor support portion 111, a guide portion 112, and a lead screw support mechanism 140. The motor support portion 111 supports a motor 131 included in the main unit 150. The guide portion 112 has straight grooves 112a that engage with straight groove engagement portions 123 of a moving unit 120, which will be described later, and guides the moving unit 120 in the axial direction of a lead screw 135. The support unit 110 is fixed to the second fixed barrel 11 so that the axis of the lead screw 135 is parallel to the optical axis OA.

The main unit 150 includes a driving unit 130 and the moving unit 120. The driving unit 130 includes the motor 131 and the lead screw 135. For example, a stepping motor, an ultrasonic motor, or the like can be used as the motor 131.

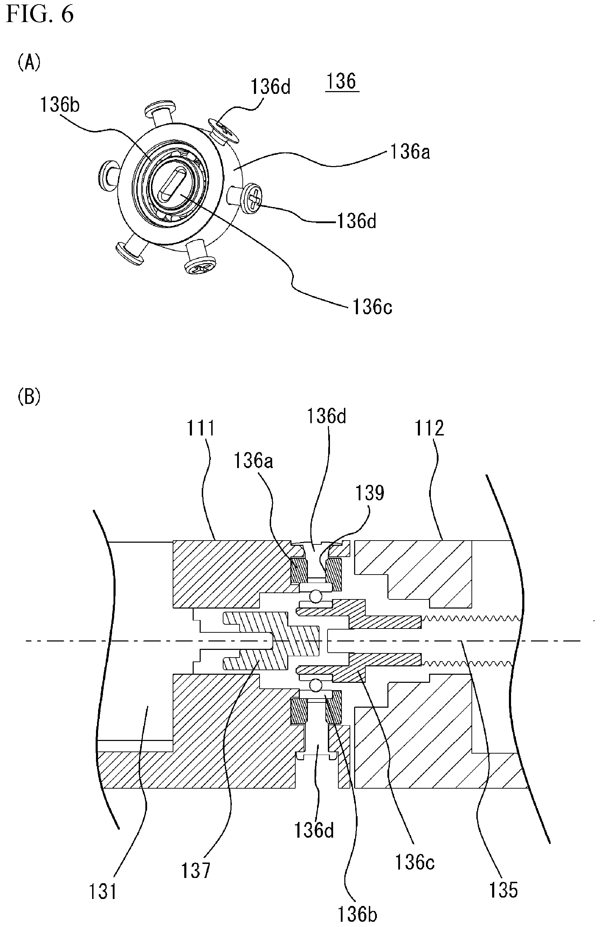

In the present embodiment, the output shaft of the motor 131 and the lead screw 135 are connected by a coupling unit 136. FIG. 6(A) is a perspective view illustrating a configuration of the coupling unit 136, and FIG. 6(B) is a cross-sectional view illustrating the configuration of the coupling unit 136.

As illustrated in FIG. 6(A), the coupling unit 136 includes a connecting portion 136c, a bearing 136b, a housing portion 136a, and alignment portions 136d. The connecting portion 136c connects the output shaft of the motor 131 and the lead screw 135. Specifically, as illustrated in FIG. 6(B), a connecting member 137 is attached to the output shaft of the motor 131, and the connecting member 137 and a first end of the lead screw 135 are inserted into the connecting portion 136c, so that the output shaft of the motor 131 and the lead screw 135 are connected (coupled).

The outer periphery of the connecting portion 136c is fitted to the inner ring of the bearing 136b, and the outer ring of the bearing 136b is fitted to the inner wall of the housing portion 136a. Thus, the connecting portion 136c is rotatably supported by the housing portion 136a. This allows the load on the motor 131 to be less than that in the case where the portion where the output shaft of the motor 131 and the lead screw 135 are coupled is supported without the bearing 136b.

The housing portion 136a is in a ring shape and has through holes 139 penetrating through the housing portion 136a. In the present embodiment, six through holes 139 are provided at equal intervals in the circumferential direction of the housing portion 136a, and the alignment portion 136d is inserted into each of the through holes 139. The alignment portion 136d is, for example, a bolt, and the degree of contact between the alignment portion 136d and the outer ring of the bearing 136b can be adjusted by moving the alignment portion 136d in the radial direction of the housing portion 136a. By adjusting the degree of contact between each alignment portion 136d and the outer ring of the bearing 136b, the position of the shaft center of the output shaft of the motor 131 and the position of the shaft center of the lead screw 135 can be adjusted (substantially aligned). That is, the coupling unit 136 has an alignment mechanism.

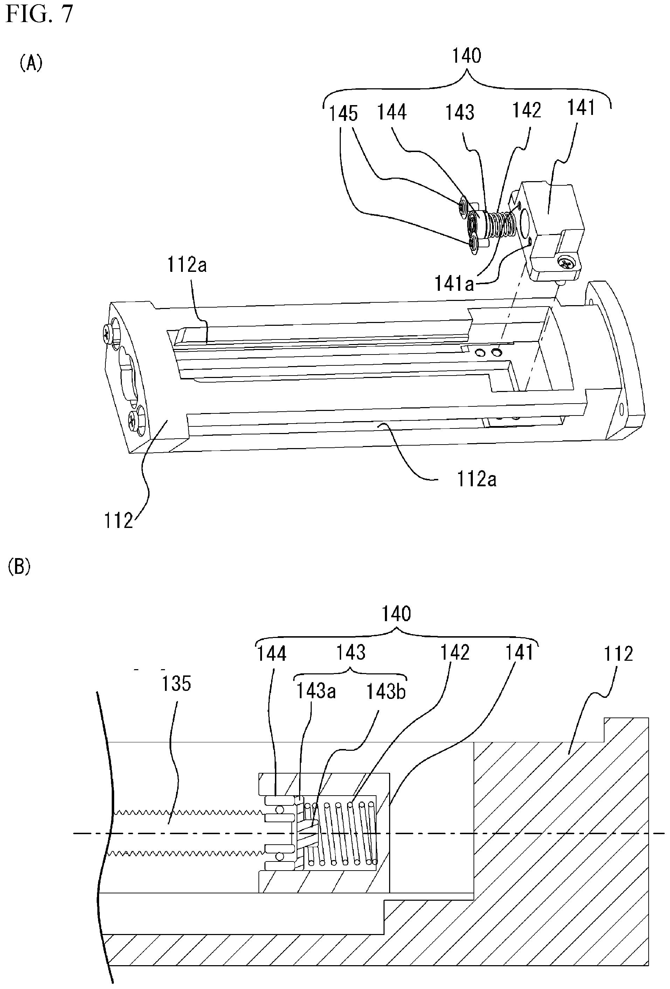

Referring back to FIG. 5(A), one of the two end portions of the lead screw 135, which is not connected to the output shaft of the motor 131, is rotatably supported by the lead screw support mechanism 140. FIG. 7(A) and FIG. 7(B) are views for describing a configuration of the lead screw support mechanism 140. FIG. 7(A) is an exploded view of the lead screw support mechanism 140, and FIG. 7(B) is a cross-sectional view of the lead screw support mechanism 140.

The lead screw support mechanism 140 is attached to the guide portion 112. The lead screw support mechanism 140 includes a housing portion 141, a compression spring 142, a backlash eliminating member 143, a bearing 144, and a screw 145.

The housing portion 141 houses the compression spring 142, the backlash eliminating member 143, and the bearing 144. The housing portion 141 has holes 141a into which the screws 145 are inserted. The screws 145 are inserted into the respective holes 141a to prevent the bearing 144 from coming out of the housing portion 141.

An end portion of the lead screw 135 is fitted to the inner ring of the bearing 144, and the outer ring of the bearing 144 is fitted to the inner wall of the housing portion 141. Thus, the lead screw support mechanism 140 can rotatably support the lead screw 135 and reduce the frictional resistance during the rotation of the lead screw 135. Therefore, the load on the motor 131 can be reduced.

The compression spring 142 biases the outer ring of the bearing 144 toward the lead screw 135 via the backlash eliminating member 143. To be more specific, the backlash eliminating member 143 includes an outer edge portion 143a that is in contact with the outer ring of the bearing 144 and an engaging portion 143b that engages with the compression spring 142, and the compression spring 142 biases the backlash eliminating member 143 toward the lead screw 135, whereby the outer edge portion 143a biases the outer ring of the bearing 144 toward the lead screw 135. This makes it possible to reduce the axial backlash due to the axial internal gap of the bearing 144.

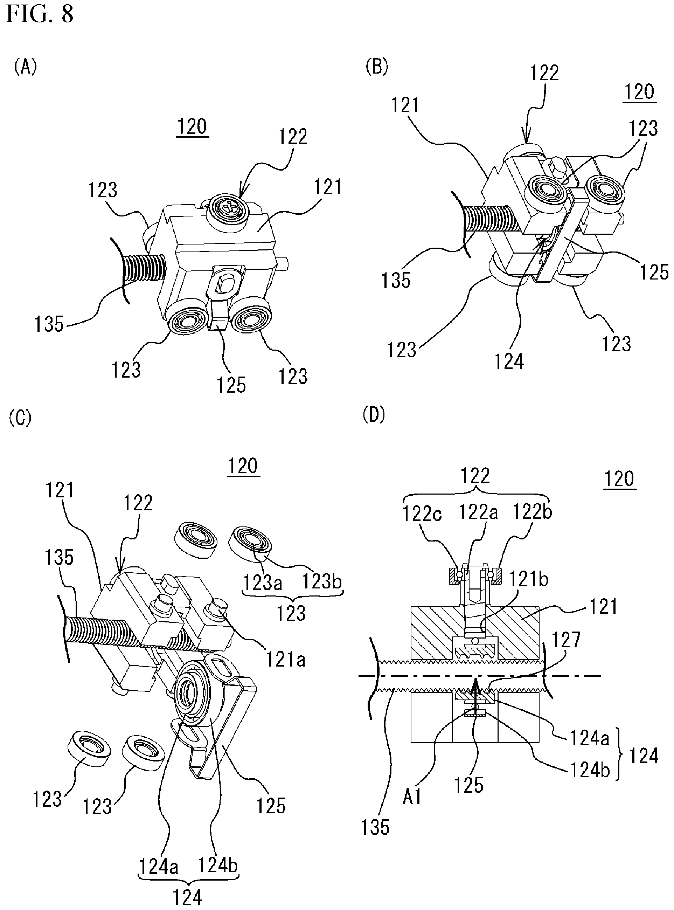

Next, the moving unit 120 will be described. The moving unit 120 moves in the axial direction of the lead screw 135 in accordance with the rotation of the lead screw 135. FIG. 8(A) to FIG. 8(D) are views for describing a configuration of the moving unit 120. FIG. 8(A) and FIG. 8(B) are perspective views of the moving unit 120 as viewed from different directions, FIG. 8(C) is an exploded perspective view of the moving unit 120, and FIG. 8(D) is a cross-sectional view of the moving unit 120.

The moving unit 120 includes a support portion 121, a cam groove engagement portion 122 corresponding to a first protrusion, the straight groove engagement portions 123 corresponding to a third protrusion, a lead screw engagement portion 124, and a biasing portion 125.

The support portion 121 supports the cam groove engagement portion 122, the straight groove engagement portions 123, the lead screw engagement portion 124, and the biasing portion 125.

The cam groove engagement portion 122 penetrates through the clearance groove 11a (see FIG. 2(A)) of the second fixed barrel 11 and engages with the first cam groove 20a (see FIG. 2(B)) of the zoom cam ring 20 (see FIG. 4(B)). Thus, when the moving unit 120 (cam groove engagement portion 122) moves in the axial direction of the lead screw 135, the zoom cam ring 20 rotates.

As illustrated in FIG. 8(D), the cam groove engagement portion 122 includes a fixing portion 122a, a ring-shaped member 122b, and a bearing 122c. The fixing portion 122a is fixed to the support portion 121. The outer periphery of the fixing portion 122a is fitted to the inner ring of the bearing 122c. The outer ring of the bearing 122c is fitted to the inner wall of the ring-shaped member 122b. Thus, the ring-shaped member 122b is rotatably supported by the support portion 121. Since the ring-shaped member 122b is rotatable, the friction generated when the cam groove engagement portion 122 moves within the first cam groove 20a of the zoom cam ring 20 is rolling friction. Since the rolling friction is much smaller than the sliding friction, the load applied to the motor 131 when the cam groove engagement portion 122 moves in the first cam groove 20a of the zoom cam ring 20 can be made to be less than that in the case where the ring-shaped member 122b cannot rotate.

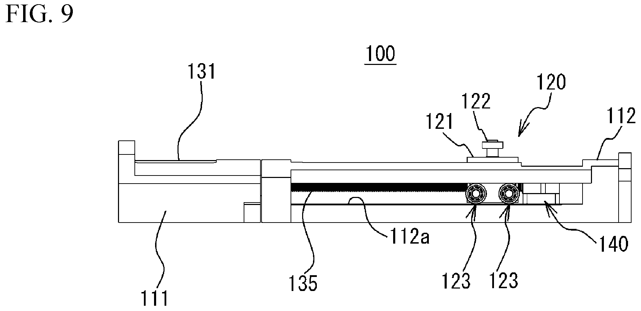

As illustrated in FIG. 9, the straight groove engagement portion 123 engages with the straight groove 112a of the guide portion 112. This allows the moving unit 120 to be guided in the axial direction of the lead screw 135. FIG. 9 is a side view of the drive mechanism 100.

As illustrated in FIG. 8(C), the straight groove engagement portion 123 includes a bearing 123a and a ring-shaped member 123b. The inner ring of the bearing 123a is fitted to the outer periphery of a protrusion portion 121a of the support portion 121. The outer ring of the bearing 123a is fitted to the inner wall of the ring-shaped member 123b. Thus, the ring-shaped member 123b is rotatably supported by the support portion 121. Since the ring-shaped member 123b is rotatable, the friction generated when the straight groove engagement portion 123 moves within the straight groove 112a is rolling friction. This allows the load applied to the motor 131 when the straight groove engagement portion 123 moves within the straight groove 112a to be less than that in the case where the ring-shaped member 123b cannot rotate.

As illustrated in FIG. 8(D), the lead screw engagement portion 124 includes a ring-shaped member 124a and a bearing 124b. The outer periphery of the ring-shaped member 124a is fitted to the inner ring of the bearing 124b. Grooves 127 that are in contact with the thread groove of the lead screw 135 are formed on the inner circumference of the ring-shaped member 124a. The groove 127 is a circumferential groove formed over the entire inner circumference of the ring-shaped member 124a.

The ring-shaped member 124a is biased toward the lead screw 135 in a direction orthogonal to the axial direction of the lead screw 135 as indicated by an arrow A1 in FIG. 8(D) by the biasing portion 125, which is a plate spring. Thus, the grooves 127 of the ring-shaped member 124a are pressed against the thread groove of the lead screw 135, and therefore, the backlash between the ring-shaped member 124a and the lead screw 135 is reduced. Further, since a part of the bearing 124b is accommodated in a housing portion 121b of the support portion 121, the support portion 121 and the lead screw engagement portion 124 are connected to each other. The ring-shaped member 124a may be biased toward the lead screw 135 by another biasing member.

Since the ring-shaped member 124a is rotatably supported, when the lead screw 135 rotates, the ring-shaped member 124a is pushed by the flank surface of the screw groove of the lead screw 135 and moves in the axial direction of the lead screw 135 while rotating. Accordingly, the support portion 121 supporting the ring-shaped member 124a also moves in the axial direction of the lead screw 135, and thus the moving unit 120 can be moved in the optical axis OA direction. Further, since the ring-shaped member 124a moves in the axial direction of the lead screw 135 while rotating, the friction generated between the ring-shaped member 124a and the lead screw 135 is rolling friction. This reduces the load applied to the motor 131 when the moving unit 120 is moved in the axial direction of the lead screw 135. The structure disclosed in Japanese Patent Application No. 2021-156263 may be employed as the structure of the lead screw engagement portion 124.

Since the cam groove engagement portion 122 of the moving unit 120 is engaged with the first cam groove 20a of the zoom cam ring 20, when the zoom cam ring 20 rotates by the movement of the moving unit 120 in the optical axis OA direction, the lens holding frame F3 moves straight in the optical axis OA direction along the first straight groove 11b and the second cam groove 20b, and the lens holding frame F4 moves straight in the optical axis OA direction along the second straight groove 11c and the third cam groove 20c. Since the zoom cam ring 20 is rotated using the first cam groove 20a, noise can be reduced as compared with the case where the zoom cam ring 20 is rotated using a gear.

As described above in detail, the lens barrel 2 according to the present embodiment includes the moving unit 120 having the cam groove engagement portion 122, the driving unit 130 for linearly moving the moving unit 120 in the optical axis OA direction, the zoom cam ring 20 that has the first cam groove 20a, which engages with the cam groove engagement portion 122, and the second cam groove 20b, and the lens holding frame F3 that has the cam pin 41, which engages with the second cam groove 20b, and holds the lens group L3. The zoom cam ring 20 rotates as the moving unit 120 moves in the optical axis OA direction, and the lens holding frame F3 moves in the optical axis OA direction by the rotation of the zoom cam ring 20. Since the zoom cam ring 20 is rotated by using the first cam groove 20a, the noise generated when the zoom cam ring 20 is rotated can be reduced as compared with the case where the zoom cam ring 20 is rotated by using a gear.

In the present embodiment, the moving unit 120 includes the straight groove engagement portion 123, and the lens barrel 2 includes the guide portion 112 having the straight groove 112a that engages with the straight groove engagement portion 123. This allows the moving unit 120 to move straight in the optical axis OA direction.

In the present embodiment, the cam groove engagement portion 122 (ring-shaped member 122b) is rotatable about the center of the cam groove engagement portion 122. Thus, as compared with a case where the cam groove engagement portion 122 (ring-shaped member 122b) cannot rotate, the load applied to the motor 131 when the cam groove engagement portion 122 moves within the first cam groove 20a can be reduced. Thus, when the motor 131 having the same power is used to rotate the zoom cam ring 20 having the same weight, the zoom cam ring 20 can be rotated at a higher speed than when the cam groove engagement portion 122 (ring-shaped member 122b) cannot be rotated (when sliding friction is generated). For example, when the motor 131 having the same power is used, the zoom cam ring 20 heavier than that in the case where the cam groove engagement portion 122 (ring-shaped member 122b) is supported so as not to be rotatable (in the case where sliding friction is generated) can be rotated. Further, when the zoom cam ring 20 having the same weight is rotated, the motor 131 having smaller power can be used than in the case where the cam groove engagement portion 122 (ring-shaped member 122b) is supported so as not to be rotatable (in the case where sliding friction is generated), and therefore, the drive mechanism 100 can be downsized.

In the present embodiment, the straight groove engagement portion 123 (ring-shaped member 123b) is rotatable about the center of the straight groove engagement portion 123. Thus, compared with a case where the straight groove engagement portion 123 (ring-shaped member 123b) cannot rotate, it is possible to reduce a load applied to the motor 131 when the straight groove engagement portion 123 moves within the straight groove 112a. Thus, when the motor 131 having the same power is used to rotate the zoom cam ring 20 having the same weight, the zoom cam ring 20 can be rotated at a higher speed than when the straight groove engagement portion 123 (ring-shaped member 123b) cannot be rotated (when sliding friction is generated). Further, for example, when the motor 131 having the same power is used, the zoom cam ring 20 heavier than that in the case where the straight groove engagement portion 123 (ring-shaped member 123b) is supported so as not to be rotatable (in the case where sliding friction is generated) can be rotated. Further, when the zoom cam ring 20 having the same weight is rotated, the motor 131 having smaller power can be used than in the case where the straight groove engagement portion 123 (ring-shaped member 123b) is supported so as not to be rotatable (in the case where sliding friction is generated), and therefore, the drive mechanism 100 can be downsized.

In the present embodiment, the moving unit 120 includes a plurality of the straight groove engagement portions 123. This makes it possible to stably guide the moving unit 120 in the optical axis OA direction.

In the present embodiment, the zoom cam ring 20 further includes the third cam groove 20c. The lens barrel 2 includes the lens holding frame F4 that has the cam pin 42 engaged with the third cam groove 20c and holds the lens group L4, and the lens holding frame F4 moves in the optical axis OA direction by the rotation of the zoom cam ring 20. Thus, the plurality of the lens groups L3 and L4 can be moved in the optical axis OA direction by the single motor 131, and therefore, power consumption can be reduced as compared with a case where a plurality of motors are provided to drive the plurality of lens groups, respectively.

In the present embodiment, the driving unit 130 includes the motor 131 having an output shaft and the lead screw 135, the output shaft and the lead screw 135 are connected by the coupling unit 136, and the coupling unit 136 has an alignment mechanism that adjusts the position of the shaft center of the output shaft and the position of the shaft center of the lead screw 135. This makes it possible to reduce vibration and noise caused by misalignment between the shaft center of the output shaft of the motor 131 and the shaft center of the lead screw 135.

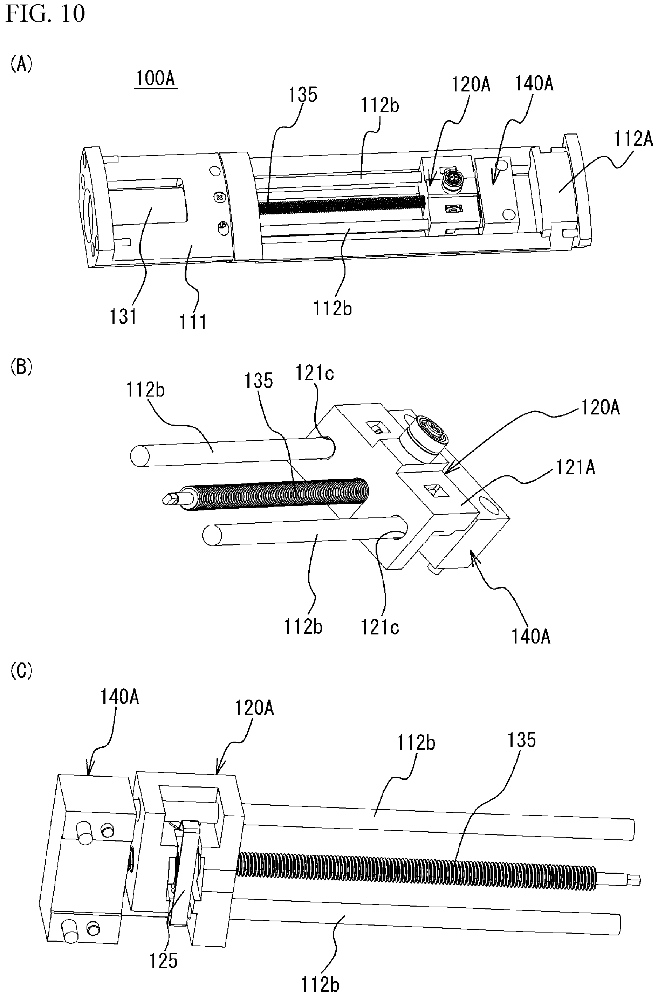

In the above embodiment, the mechanism illustrated in FIG. 10(A) to FIG. 10(C) may be used as the mechanism for guiding the moving unit 120 in the optical axis OA direction. FIG. 10(A) is a perspective view of a drive mechanism 100A according to a first variation, and FIG. 10(B) and FIG. 10(C) are perspective views illustrating a guide portion 112A, a moving unit 120A, and a lead screw support mechanism 140A according to the first variation.

As illustrated in FIG. 10(A), the guide portion 112A includes guide bars 112b extending in parallel to the axial direction of the lead screw 135. The guide bars 112b are supported by the lead screw support mechanism 140A.

As illustrated in FIG. 10(B), two through holes 121c are provided in a support portion 121A of the moving unit 120A, and the guide bars 112b are inserted into the through holes 121c, respectively. Thus, the moving unit 120A is guided by the guide bars 112b in the axial direction of the lead screw 135 (i.e., the optical axis OA direction).

In the above embodiment, the zoom cam ring 20 is disposed further outward than the second fixed barrel 11, but this does not intend to suggest any limitation. The zoom cam ring 20 may be disposed further inward than the second fixed barrel 11.

In the above embodiment, a lens holding frame that holds a lens group different from the lens groups L3 and L4 may be connected to the moving unit 120, and the lens holding frame may be moved in the optical axis OA direction by the moving unit 120. That is, the moving unit 120 and the lens holding frame may be integrally moved in the optical axis OA direction. Thus, the three lens holding frames can be moved straight in the optical axis OA direction by the single motor 131.

In the above embodiment, the bearing 124b provided in the lead screw engagement portion 124 of the moving unit 120 is not limited to a bearing, and may be any rotatable rolling element such as a bearing. The bearing 124b and the ring-shaped member 124a may be formed integrally.

In the above embodiment, the lead screw engagement portion 124 of the moving unit 120 includes the ring-shaped member 124a and the bearing 124b, but this does not intend to suggest any limitation. The lead screw engagement portion 124 may include, for example, only the ring-shaped member 124a. That is, the ring-shaped member 124a may not necessarily rotate.

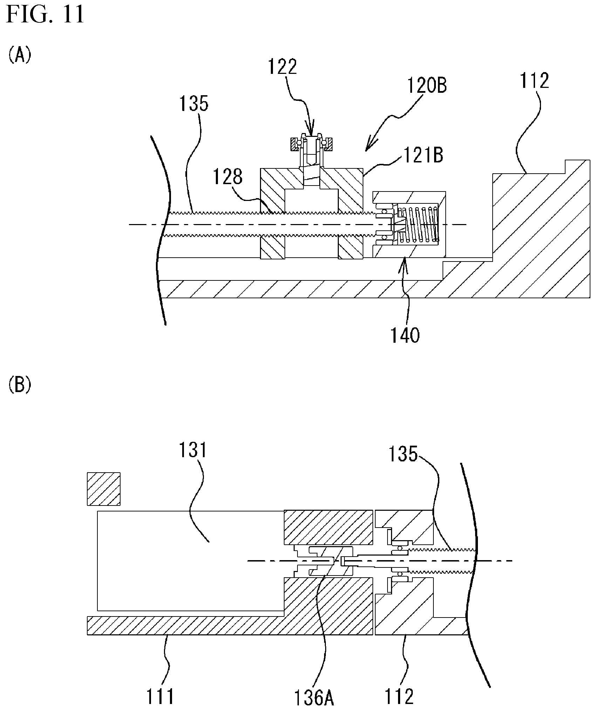

In the above embodiment, the lead screw engagement portion 124 of the moving unit 120 may be a nut or a rack. FIG. 11(A) is a cross-sectional view of a moving unit 120B according to a second variation. As illustrated in FIG. 11(A), for example, a screw groove 128 that engages with the screw groove of the lead screw 135 over the entire circumference may be formed on a support portion 121B.

In the above embodiment, the straight groove engagement portion 123 of the moving unit 120 may not necessarily include the bearing 123a. That is, the ring-shaped member 123b may be supported so as not to be rotatable.

In the above embodiment, the output shaft of the motor 131 and the lead screw 135 are connected by the coupling unit 136 having the alignment mechanism, but this does not intend to suggest any limitation. FIG. 11(B) is a cross-sectional view illustrating a coupling unit 136A according to a third variation.

As illustrated in FIG. 11(B), the motor 131 and the lead screw 135 may be directly connected to each other by the coupling unit 136A that does not have an alignment mechanism. Further, the output shaft of the motor 131 and the lead screw 135 may be coupled to each other by using an existing coupling (shaft joint).

The above embodiments are preferred examples. However, the present disclosure is not limited to this, and various modifications can be made without departing from the scope of the present disclosure, and freely-selected constituent features may be combined.

### DESCRIPTION OF REFERENCE NUMERALS

- 1: camera
- 2: lens barrel
- 11: second fixed barrel
- 20: zoom cam ring
- 20a: first cam groove
- 20b: second cam groove
- 20c: third cam groove
- 41: cam pin
- 42: cam pin
- 120: moving unit
- 112: guide portion
- 112a: straight groove
- 122: cam groove engagement portion
- 123: straight groove engagement portion
- 130: driving unit
- 131: motor
- 135: lead screw
- 136: coupling unit
- L3, L4: lens group
- F3, F4: lens holding frame
- OA: optical axis

## Claims

1. A lens barrel comprising:
a moving unit having a first protrusion;
a driving unit configured to move the moving unit straight in an optical axis direction;
a first barrel having a first cam groove, which engages with the first protrusion, and a second cam groove; and
a first lens holding frame that has a second protrusion, which engages with the second cam groove, and holds a first lens,
wherein the first barrel rotates as the moving unit moves in the optical axis direction, and
wherein the rotation of the first barrel moves the first holding frame in the optical axis direction.

2. The lens barrel according to claim 1,
wherein the moving unit includes a third protrusion, and
wherein the lens barrel includes a guide portion having a straight groove that engages with the third protrusion.

3. The lens barrel according to claim 2, wherein the moving unit includes the third protrusion in plural.

4. The lens barrel according to claim 2 or claim 3, wherein the third protrusion is rotatable about a center of the third protrusion.

5. The lens barrel according to any one of claims 1 to 4, wherein the first protrusion is rotatable about a center of the first protrusion.

6. The lens barrel according to any one of claims 1 to 5,
wherein the first barrel further has a third cam groove, and
wherein the lens barrel includes a second lens holding frame that has a fourth protrusion, which engages with the third cam groove, and holds a second lens, and
wherein the second lens holding frame moves in the optical axis direction by rotation of the first barrel.

7. The lens barrel according to any one of claims 1 to 6, further comprising:
a second barrel provided further outward than or further inward than the first barrel.

8. The lens barrel according to any one of claims 1 to 7, further comprising:
a third lens holding frame that holds a third lens,
wherein the third lens holding frame moves along the optical axis direction integrally with the moving unit.

9. The lens barrel according to any one of claims 1 to 8,
wherein the drive unit includes a motor, which has an output shaft, and a lead screw,
wherein the output shaft and the lead screw are connected by a coupling unit, and
wherein the coupling unit has an alignment mechanism that adjusts a position of a shaft center of the output shaft and a position of a shaft center of the lead screw.

10. An imaging device comprising the lens barrel according to any one of claims 1 to 9.
